Europäisches Patentamt

European Patent Office

Office européen des brevets

(19)

(11) Publication number: **0 445 877 B1**

(12) **EUROPEAN PATENT SPECIFICATION**

(45) Date of publication of patent specification: **17.11.94** (51) Int. Cl.[5]: **C03C 8/04**, C03C 10/02

(21) Application number: **91200442.1**

(22) Date of filing: **01.03.91**

(54) **Vitreous ceramic composition suitable for coating ceramic articles.**

(30) Priority: **09.03.90 IT 1964190**

(43) Date of publication of application:
**11.09.91 Bulletin  91/37**

(45) Publication of the grant of the patent:
**17.11.94 Bulletin  94/46**

(84) Designated Contracting States:
**BE DE DK ES FR GB GR IT NL SE**

(56) References cited:
**US-A- 3 637 425**
**US-A- 4 687 750**

**PATENT ABSTRACTS OF JAPAN vol. 5, no. 180 (C-079) 19 November 1981,& JP-A-56 104747 (NIPPON ELECTRIC GLASS CO) 20 August 1981,**

**PATENT ABSTRACTS OF JAPAN vol. 13, no. 515 (C-655) 17 November 1989,& JP-A-01 208343 (OHARA INC) 22 August 1989,**

**CHEMICAL ABSTRACTS, vol. 95, no. 8, 24 August 1981 Columbus, Ohio, USA page284; ref. no. 66563D &JP-A-56005348 (ASAHI GLASS CO) 20-01-81**

**JOURNAL OF NON-CRYSTALLINE SOLIDS. vol. 80, no. 1/3, March 1986, AMSTERDAM NLpages 215 - 219; T.WU ET AL.: "EFFECT OF AL2O3 ON PHASE SEPARATION AND-CRYSTALLIZATION IN ZNO-AL2O3-B2O3-SIO2 GLASSES."**

(73) Proprietor: **CERAMICA FILIPPO MARAZZI S.p.A.**
**Via della Zecca, 1**
**I-40121 Bologna (IT)**

(72) Inventor: **Marazzi, Filippo**
**Viale Regina Pacis, 39**
**I-41049 Sassuolo (Modena) (IT)**
Inventor: **Paganelli, Mariano**
**Via Matarelli, 58**
**I-41100 Modena (IT)**

(74) Representative: **Faraggiana, Vittorio, Dr. Ing.**
**Ingg. Guzzi & Ravizza S.r.l.**
**Via Vincenzo Monti 8**
**I-20123 Milano (IT)**

## Description

The coating of ceramic articles with glass ceramic materials has been a known industrial practice for a long time, already described in previous patents, for example patent no. 913036 of this applicant.

To obtain a coating usable with ceramics, or give rise to crystallization of polycrystalline phases starting from a vitreous matrix, it is necessary that the composition be carefully studied so as to favour crystallization of the desired phases.

For example compositions rich in zinc have been used for a long time to obtain coatings for ceramic articles. In these compositions the crystalline phases which are formed during devitrification are always made up of zinc silicates, for example Willemite.

Glass ceramic materials assimilable with this family are known, for example as described in U.S. Patents 2,920,971, 3,460,987, 3,681,097, 3,681,102, 3,839,053, 3,854,963, 3,951,669, 4,199,340, 4,526,873, 4,687,750 and FR 1,496,496.

The object of the present invention is to propose a vitreous ceramic composition based on zinc and alumina capable of separating rapidly up to 50 % of crystalline phase, displaying excellent acid resistance and wear, and whose softening temperature is ideal for the most common heat cycles. It is known in particular that in the single firing cycles the softening temperature of the glaze must be higher than the degassing temperature of the support.

Another object of the invention is to obtain such a composition suitable for wet or dry glazing, readily colourable and with a linear heat expansion coefficient which can be changed to adapt it to commonly used ceramic supports, in particular for the moulding of tiles.

To achieve these and other objects which will be more fully clarified by the following description, the invention proposes a vitreous ceramic composition characterized in that it comprises the following ingredients in the indicated percentages by weight:

| | |
|---|---|
| $SiO_2$ | 30 - 50 % |
| $Al_2O_3$ | 10 - 25 % |
| $ZnO$ | 8 - 25 % |
| $B_2O_3$ | 5 - 20 % |
| $TiO_2$ | 0 - 7 % |

In the composition other accessorial elements can be present up to a maximum of 5% by weight of the composition with the following limitations:

the aggregate of the oxides of the $R_2O$ family ($Li_2O$, $Na_2O$, $K_2O$, $Rb_2O$, $Cs_2O$) must not exceed 8% by weight of the composition;

the aggregate of the oxides of the RO family ($MgO$, $CaO$, $SrO$, $BaO$, $PbO$) must not exceed 5% by weight of the composition.

These oxides can be selected in such a manner as to change the fusibility and expansion coefficient characteristics based on the specific applications.

The composition in accordance with the invention based on zinc and alumina proved to be capable of separating up to 50 % of the crystalline phase consisting essentially of gahnite (zinc aluminate).

It was also found that such a composition allows obtaining a very high devitrification speed which makes it suitable for the most modern production technologies for glazed ceramic articles, in particular tiles. The firing speed of the articles has increased continuously with progress in the technology and the latest technological developments, such as for example the cycle which calls for direct deposit of the composition on an incandescent ceramic support (the object of patent no. 1,183,389), require vitreous compositions capable of devitrifying in extremely short times on the order of a few minutes.

Said composition in accordance with the invention proved to be suitable for optimization of the basic parameters for the industrial application which is the object of the present invention; in particular:

a) the linear heat expansion coefficient can be readily modified so as to adapt perfectly to the ceramic supports used in normal industrial practice, in particular for tiles;

b) acid resistance is excellent, contrary to that which is notoriously characteristic of zinc-based glazes where it crystallizes predominantly Willemite (zinc silicate). Gahnite is classified among the acid-insoluble materials (CRC Handbook of chemistry and physics) whereas Willemite is readily soluble;

c) wear resistance is clearly improved in relation to known zinc-based compositions, because the Gahnite, thanks to its high hardness of 7.5-8 on the Mohs scale, gives the ceramic coating high resistance, contrary to willemite which has a hardness of 5.5 (CRC Handbook);

d) the softening temperature obtainable with the compositions in accordance with the invention are ideal for the more common heat cycles and in particular single heat cycles;

e) crystallization speed is sufficiently high to permit complete devitrification in a few minutes, such that is to make these compositions suitable for application in the technological cycle with direct application on the incandescent support.

The composition can be prepared in accordance with known industrial practice, i.e. mixing suitable raw materials, then bringing them to melting in a suitable smelting furnace and suddenly cooling the vitreous mass in water (operation known as 'fritting').

The vitreous compound thus obtained can be applied on the support in accordance with known industrial technologies:

a) wet glazing, in the form of a suspension in water applied on baked supports (biscuit), or raw (single fired);

b) dry glazing by single pressing or application in the form of powder or grit on baked, raw or incandescent supports.

The crystalline phase which separates during the firing cycle (Gahnite) leads to total dulling. The surface can be obtained either bright or matt (opaque) depending on the size of the crystals obtained appropriately selecting the heat cycle and the composition.

The residual vitreous phase is readily colourable by known techniques.

To obtain the above mentioned characteristics none of the vitreous ceramics compositions heretofore proposed or known in industrial practice offered satisfactory results.

But now it has been surprisingly found that the composition in accordance with the invention achieves all the proposed objects and displays singularly favourable characteristics.

The great elasticity in the composition, in particular the possibility of adding oxides up to 5% by weight, is a new and very important fact because it permits optimization of the characteristics of the product as regards all factors.

For example, it permits adaptation of the expansion coefficient, changing the quantity of alkalis, or lowering the surface tension of the vitreous phase, introducing small percentages of lead. In the majority of known compositions it is necessary to exercise great care to not introduce harmful elements which would disturb the devitrification process or would change the characteristics of the ceramic product.

The composition in accordance with the present invention is very flexible and permits obtaining a broad range of effects which go from completely bright glaze to matt, just by utilizing in a positive manner the sensitivity to the variations of composition.

For example, the size of the crystals can be effectively controlled by varying the percentage of titanium, which shows a very energetic nucleating activity. Even with substantial percentages of titanium dioxide the ceramic product is perfectly white while the majority of the conventional compositions take on an unpleasant yellow colour.

It is possible to use other classical nucleators such as zirconium and tin but their lesser solubility in the glass makes the melting operations more difficult and the higher cost makes them uneconomical. Since titanium does not interfere with coloration, behaves very well as a nucleator and favours melting operations by reducing the viscosity of the melted glass, it is the best choice. In the absence of nucleators the devitrification process takes place in a less diffuse manner in the mass and is influenced mainly by the size of the grains. In this manner there is obtained a smaller number of crystals which then grow up to larger size, even disturbing the surface of the glass and thus creating a matt effect. This particular aesthetic effect can then be controlled by introducing in the composition of the glass small percentages of oxides which reduce the surface tension so as to favour both crystal growth and emergence from the surface of the residual vitreous phase.

The ability of introducing a large variety of accessorial elements also permits adaptation of the compositions to the most varied firing cycles, since it is possible to obtain, in the indicated field of compositions, products with firing temperatures varying between 1000°C and 1200°C.

At lower temperatures there is obtained only partial sinterization of the glass grains with formation of metastable phases. Starting from 1000°C however the crystalline phase which separates is made up essentially of gahnite which, in this range of temperatures, is the compound most favoured dynamically.

Over 1200°C it is possible to encounter a partial solution heat-treatment of the crystalline phases which are formed already starting at 1000°C with consequent excessive growth of a few crystalline nuclei. In conclusion, the product loses opaqueness and takes on a poor appearance.

In any case the temperature range in which these compositions can be used includes abundantly the larger part of the firing cycles of glazed ceramic articles.

As concerns the duration of the firing cycle it has already been pointed out that these compositions are characterized by high crystallization speed, thereby adapting well to the fastest cycles also.

If the firing cycles are slower there are no problems because once complete devitrification has been achieved the product remains stable over a vast range of temperatures and times.

There are now described below nonlimiting examples of the ceramic composition in accordance with the invention.

EXAMPLE 1

Veneer tiles 20 x 25 with porous single-firing.
The following composition was used:

| $SiO_2$ | 35.3 | $B_2O_3$ | 14.4 | $Al_2O_3$ | 21.6 |
|---------|------|----------|------|-----------|------|
| CaO     | 1.2  | MgO      | 2.7  | ZnO       | 17.2 |
| $K_2O$  | 3.2  | $Na_2O$  | 2.2  | $TiO_2$   | 2.3  |

The mixture of suitable raw materials was melted in a tank furnace at 1450 °C and cooled suddenly in water.

The frit thus obtained is perfectly transparent and the glass appeared amorphous upon diffractometer analysis with X-rays.

The frit was then ground wet with the addition to each 100 g of dry 75 g of water, 5 g of bentonite, 0.3 g of carboxymetylcellulose and 0.2 g of sodium tripolyphosphate as suspension and fluidizing agents. The enamel barbotine thus obtained was applied to raw pieces 20 x 25 cm previously coated with a layer of engobe in accordance with known industrial practice. The quantity of glaze applied was 40 g of suspension for each piece, which corresponds to 8 g/dm$^2$.

The raw glazed pieces were appropriately dried and then introduced in a one-layer kiln with rollers of the SM SITI type.

The firing cycle had a duration of 45 minutes with maximum temperature of 1060 °C and holding at maximum temperature for 5 minutes.

The fired pieces appear with orange peel surface, pleasantly bright and decidedly white and defect-free.

Diffractometer analysis with X-rays reveals that the crystalline phase formed represents 40% of the mass and consists of Gahnite.

The linear heat expansion coefficient in the range 25 to 300 °C was $5.64 \times 10^{-6}$.

The incipient melting temperature measured with a Leitz heating microscope was 1000 °C. hence suitable for single-firing porous glazes.

Acid resistance was excellent. The product is classified AA by the EN 122 test.

EXAMPLE 2

Grés floor tiles size 30 x 30 obtained by single firing.
The following composition was used:

| $SiO_2$ | 40.4 | $B_2O_3$ | 15.0 | $Al_2O_3$ | 17.5 |
|---------|------|----------|------|-----------|------|
| MgO     | 2.9  | ZnO      | 13.9 | $K_2O$    | 2.7  |
| $Na_2O$ | 1.8  | $TiO_2$  | 5.7  |           |      |

The frit and glaze were prepared as described in the previous example. The glaze was then applied on the raw pieces size 30 x 30 cm previously coated with engobe in accordance with known industrial practice.

The quantity of glaze applied was 72 g of suspension for each piece, corresponding to 8 g/dm$^2$.

The raw glazed pieces were appropriately dried and then introduced in a single-layer roller kiln of the SITI SM type. The firing cycle was 60 minutes with maximum temperature of 1130 °C held for 5 minutes.

The fired pieces appear with smooth bright white surface.

Diffractometer analysis with X-rays reveals that the crystalline phase formed represents 30% of the mass and consists of Gahnite.

The linear heat expansion coefficient in the range 25 to 300 °C was $5.45 \times 10^{-6}$.

The incipient melting temperature measured with a Leitz heating microscope was 1020 °C.

4

EP 0 445 877 B1

Acid and base resistance measured in accordance with the EN 122 method was excellent. The product is not etched and is therefore classifiable AA.

Abrasion resistance measured in accordance with the PEI method gave a weight loss of 0.8500 g after 25000 revolutions while, after 6000 revolutions (as called for in EN standard 154) weight loss was only 0,0720 g. (Tiles with conventional glazes give values two or three times higher).

EXAMPLE 3

Grés flooring tiles size 30 x 30 with direct deposit of the composition on the incandescent support.
The following composition was used:

| $SiO_2$ | 33.7 | $B_2O_3$ | 14.6 | $Al_2O_3$ | 22.7 |
|---------|------|----------|------|-----------|------|
| MgO | 2.8 | ZnO | 18.0 | K2O | 2.6 |
| $Na_2O$ | 1.7 | $TiO_2$ | 3.9 | | |

The frit was prepared as described in examples 1 and 2 but, instead of wet grinding, it was subjected to dry grinding using a steel roller mill.
The ground frit was deferrized and sifted to eliminate grains larger than 770 micrometer.
Grain size was within the following limits expressed in micro meters:

```
- high6300   high500   high400   high315   high250   high200

     0-0,5      9-12      25-28     21-24     10-15     9-11

- high125   low125

     9-11      5-7
```

The product thus prepared was applied on a sintered ceramic support in incandescent state in accordance with known technology in an FS SITI industrial kiln.

The quantity applied was 200g for each piece size 30 x 30. Holding in the glaze firing and crystallization section was 7 minutes at 1090°C.

The surface of the fired tiles was pleasantly undulated and bright and ice white in colour.

Diffractometer analysis with X-rays reveals that the crystalline phase consists essentially of Gahnite.

The heat expansion coefficient in the range 25 to 300°C was 5-64 x $10^{-6}$

The incipient melting temperature measured with the Leutz heating microscope was 1000°C.

Acid and base resistance measured in accordance with EN standard 122 was excellent. The product is not etched and hence is classifiable AA.

Abrasion resistance measured in accordance with the PEI method gave a weight loss of 0.5710 after 25000 revolutions.

Abrasion resistance measured by the Capon method (EN standard 102 for unglazed products) gave a loss by volume of 125 $mm^3$ after 150 revolutions. It should be noted that the limit for unglazed products was set at 205 $mm^3$.

The value measured on this glazed tile therefore would allow exceeding abundantly the test required for unglazed products.

EXAMPLE 4

Veneer tiles size 20 x 25 in fast double firing.
The following composition was used:

| $SiO_2$ | 36.5 | $B_2O_3$ | 14.9 | $Al_2O_3$ | 22.4 |
|---------|------|----------|------|-----------|------|
| CaO | 1.2 | MgO | 2.8 | ZnO | 17.8 |
| $K_2O$ | 2.7 | NaO | 1.8 | $TiO_2$ | 0.0 |

5

The frit and glaze were prepared as described above for Example 1.

The glaze slip was applied on porous engobed biscuit in accordance with known industrial practice in the amount of 40g per piece.

The appropriately dried pieces were fired in a single-layer roller oven of the SITI SM type. The firing cycle was 45 minutes with maximum temperature of 1060°C.

The fired pieces have a bright surface and are decidedly white.

The linear heat expansion coefficient in the range 25 to 300°C was 4.36 x $10^{-6}$.

Softening temperature was 840°C.

## Claims

1. Vitreous ceramic composition for coating ceramic articles with a zinc and alumina base characterized in that it is composed of the following ingredients within the indicated range of percentages by weight:

| | |
|---|---|
| $SiO_2$ | 30 - 50 % |
| $Al_2O_3$ | 10 - 25 % |
| ZnO | 8 - 25 % |
| $B_2O_3$ | 5 - 20 % |
| $TiO_2$ | 0 - 7 % |

designed to separate rapidly up to 50 % of the crystalline phase made up essentially of gahnite.

2. Vitreous ceramic composition in accordance with claim 1 characterized in that it further comprises oxides choiced among $Li_2O$, $Na_2O$, $K_2O$, $Rb_2O$, $Cs_2O$, MgO, CaO, SrO, BaO, PbO.

3. Vitreous ceramic composition in accordance with claim 2 characterized in that the aggregate of oxides of the $R_2O$ family ($Li_2O$, $Na_2O$, $K_2O$, $Rb_2O$, $Cs_2O$) does not exceed 8 % by weight of the composition.

4. Vitreous ceramic composition in accordance with claim 3 characterized in that the aggregate of oxides of the RO family (MgO, CaO, SrO, BaO, PbO) does not exceed 5 % by weight of the composition.

## Patentansprüche

1. Glaskeramische Zubereitung auf Basis von Zink- und Aluminiumoxid zum Überziehen keramischer Werkstücke, dadurch **gekennzeichnet**,
daß sie aus den folgenden Bestandteilen mit den angegebenen Bereichen in Gewichtsprozenten zusammengesetzt ist:

| | |
|---|---|
| $SiO_2$ | 30 - 50 % |
| $Al_2O_3$ | 10 - 25 % |
| ZnO | 8 - 25 % |
| $B_2O_3$ | 5 - 20 % |
| $TiO_2$ | 0 - 7 % |

und zur schnellen Trennung von bis zu 50 % der kristallinen Phase aus im wesentlichen Gahnit ausgebildet ist.

2. Glaskeramische Zubereitung nach Anspruch 1, dadurch **gekennzeichnet**,
daß sie ferner enthält Oxide ausgewählt aus $Li_2O$, $Na_2O$, $K_2O$, $Rb_2O$, $Cs_2O$, MgO, CaO, SrO, BaO, PbO.

3. Glaskeramische Zubereitung nach Anspruch 2, dadurch **gekennzeichnet**,
daß die Aggregierungen aus Oxiden der Familie der $R_2O$ ($Li_2O$, $Na_2O$, $K_2O$, $Rb_2O$, $Cs_2O$) nicht mehr als 8 Gew.-% der Zubereitung ausmachen.

**4.** Glaskeramische Zubereitung nach Anspruch 3, dadurch **gekennzeichnet**,
daß die Aggregierungen der Oxide der Familie der RO (MgO, CaO, SrO, BaO, PbO) nicht mehr als 5 Gew.- % der Zubereitung ausmachen.

**Revendications**

**1.** Composition céramique vitreuse utilisable pour le revêtement d'articles céramiques, comportant une base de zinc et d'alumine, caractérisée en ce qu'elle comprend les composants suivants dans la plage indiquée de pourcentages en poids :

| | |
|---|---|
| $SiO_2$ | 30 à 50 % ; |
| $Al_2O_3$ | 10 à 25 % ; |
| ZnO | 8 à 25 % ; |
| $B_2O_3$ | 5 à 20 % ; |
| $TiO_2$ | 0 à 7 % ; |

conçue pour rapidement séparer jusqu'à 50 % de la phase cristalline comprenant essentiellement du graphite.

**2.** Composition céramique vitreuse selon la revendication 1, caractérisée en ce qu'elle comprend par ailleurs des oxydes choisis parmi $Li_2O$, $Na_2O$, $K_2O$, $Rb_2O$, $Cs_2O$, MgO, CaO, SrO, BaO et PbO.

**3.** Composition céramique vitreuse selon la revendication 2, caractérisée en ce que l'agrégat d'oxydes de la famille de $R_2O$ ($Li_2O$, $Na_2O$, $K_2O$, $Rb_2O$ et $Cs_2O$) ne dépasse pas 8 % en poids de la composition.

**4.** Composition céramique vitreuse selon la revendication 3, caractérisée en ce que l'agrégat d'oxydes de la famille de RO (MgO, CaO, SrO, BaO et PbO) ne dépasse pas 5 % en poids de la composition.